# EUROPEAN PATENT APPLICATION

(11) **EP 2 224 063 A1**
(43) Date of publication of application: **01.09.2010**
(21) Application number: 09002907.5
(22) Date of filing: 28.02.2009
(51) Int. Cl.: E02F 9/16, E02F 9/08

(54) **Cab of small wing radius excavator**

(71) Applicant: Volvo Construction Equipment Holding Sweden AB, 631 85 Eskilstuna (SE)
(72) Inventor: Kim, Kang Tae, Changwon (KR)
(74) Representative: Weitzel, Wolfgang

(57) **Abstract**

A cab (2) of a small swing radius excavator is disclosed, which makes it possible to reliably prevent any collisions with a neighboring object in the course of a swing work while achieving a driver's better forward vision, by positioning a handrail (21) in a front left side pillar (20) of a cab (2) within a swing radius range of construction equipment, so the handrail (21) can be more conveniently used when a driver enters or leaves the cab (2). In a cab (2) of a small swing radius excavator which is equipped with a door for opening and closing its entrance, and a handrail (21) installed outside the cab (2), a cab of construction equipment comprises an improved handrail (21) which includes a lower handrail (21a) fixed at a lower outer side of a front left side pillar (20) of the cab (2) and positioned within a swing radius range of construction equipment and an upper handrail (21b) asymmetrically extended on the lower handrail (21a) for being positioned within a swing radius range of construction equipment and fixed at an outer upper side of a front pillar (20).

## Description

### TECHNICAL FIELD

The present invention relates a cab of a small swing radius excavator in which a handrail is installed at a front piller of the cab for allowing a driver to stably hold the same when a driver enters or leaves a cab, and in particular to a cab of a small swing radius excavator which makes it possible to reliably prevent any collisions with a neighboring object in the course of a swing work while achieving a driver's better forward vision, which might be interfered by means of a handrail in a conventional art, by positioning a handrail in a front left side piller of a cab within a swing radius range of construction equipment, so the handrail can be more conveniently used when a driver enters or leaves a cab.

### BACKGROUND ART

When construction equipment such as an excavator or something works at a narrow place under a limited work environment in a crowded region of a city, a work device such as a bucket or something engaged to a front side of construction equipment may cause problems because an engine room engaged to a rear side of construction equipment collides with its neighboring object, or a door of a cab collides with an outer object while a door of a cab is closed or opened.

In order to overcome the above-described problems, small swing radius equipment is developed, which is capable of performing a desired work while maintaining a small swing radius of a cab and a swing body. The small swing radius equipment is configured to avoid any interference by means of a work device and is compact-sized to be within its moving range, and a cab door is made of a sliding door for obtaining a reliable stability in the course of swing.

In addition, in view of the structure of a cab, an outer surface of a cab and a sliding door are outwardly curved or bent in order to obtain a substantial available space.

A front window is installed in a front side of a cab for obtaining a better driver's forward vision. A driver can have a better operation by obtaining a wider forward and upward viewing angle through a front window, and a front piller is inclined toward a rear side of construction equipment so as to avoid any interference by means of a work device (an upper side of a front piller is inclined toward a rear side of construction equipment when seeing based on a lower side of a front piller).

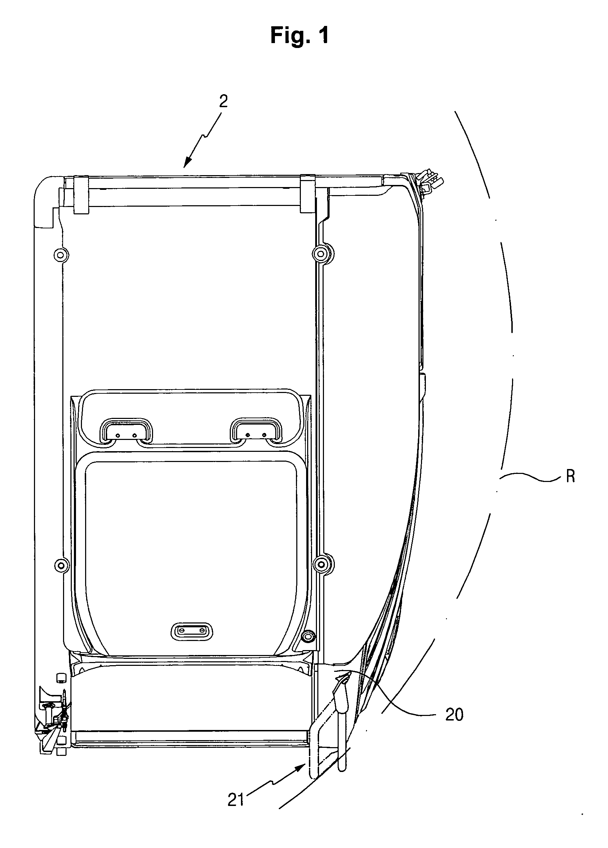

As shown in Figure 1, a conventional handrail of a small swing radius excavator has a problem that it might collide with a neighboring object and might be broken in the course of swing of construction equipment since a channel-shaped handrail 21 engaged to an outer side of a front piller 20 of a cab 2 is protruded while exceeding a swing radius R of construction equipment.

When the handrail 21 is installed within a swing radius R in consideration with the above problems (as indicated by the imaginary line of Figure 1), since the handrail 21 might be inclined toward a rightward direction of construction equipment (when viewing from a driver of an operation seat) while escaping from a front piller 20, a certain section which interferes with a driver's forward viewing angle might occur due to the handrail 21, which leads to a worse stability and poor workability.

In addition, when a driver opens a door and then leaves the cab 2, the driver might not easily catch an upper side of the handrail 21 which is inclined toward a rightward direction of construction equipment. So, the driver might feel inconvenience.

### DISCLOSURE OF THE INVENTION

Accordingly, it is an object of the present invention to provide a cab of a small swing radius excavator which can prevent a contact with a neighboring object in the course of swing work by positioning a handrail installed in a cab within a swing radius range.

It is another object of the present invention to provide a cab of a small swing radius excavator which can enhance a driver's forward viewing ability which could be interfered by means of a handrail installed to be within a swing radius range.

It is further another object of the present invention to provide a cab of a small swing radius excavator which can provide a driver with an enhanced convenience since a driver can come down in safe from a cab by opening a cab door while holding an upper side of a handrail fixed closer to an entrance side.

To achieve the above objects, in a cab of a small swing radius excavator which is equipped with a door for opening and closing its entrance, and a handrail installed outside the cab, a cab of construction equipment comprises an improved handrail which includes a lower handrail fixed at a lower outer side of a front left side piller of the cab and positioned within a swing radius range of construction equipment and an upper handrail asymmetrically extended on the lower handrail for being positioned within a swing radius range of construction equipment and fixed at an outer upper side of a front piller.

One between the upper handrail and the lower handrails is equipped with a rod shaped straight section, and the other one is equipped with an arc shaped curved section.

The upper handrail is fixed while being positioned closer to an entrance of the cab, and the lower handrail is fixed while not being positioned in front of a front window, escaping from the front piller of the cab.

### EFFECTS

As described above, the cab of a small swing radius excavator according to an embodiment of the present invention has the following advantages.

Since a handrail installed in a front piller of a cab is positioned within a swing radius range, damage to a device due to a contact or collision with a neighboring object can be basically prevented.

Even when a handrail is installed within a swing radius range, a driver's forward viewing angle is not interfered by means of the handrail, and work stability and workability can be enhanced.

When a driver opens a cab door and comes down from the cab, a driver can stably hold an upper side of a handrail fixed closer to an entrance side, so a driver would be safe.

### BRIEF DESCRIPTION OF THE DRAWINGS

The present invention will become better understood with reference to the accompanying drawings which are given only by way of illustration and thus are not limitative of the present invention, wherein;
Figure 1 is a schematic plane view illustrating a conventional cab of construction equipment;
Figure 2 is a perspective view illustrating a cab equipped with a handrail of small swing excavator according to an embodiment of the present invention;
Figure 3 is a front view illustrating a cab equipped with a handrail of small swing radius according to an embodiment of the present invention; and
Figure 4 is a plane view illustrating a cab equipped with a handrail of small swing excavator according to an embodiment of the present invention.

### MODES FOR CARRYING OUT THE INVENTION

The preferred embodiments of the present invention will be described with reference to the accompanying drawings.

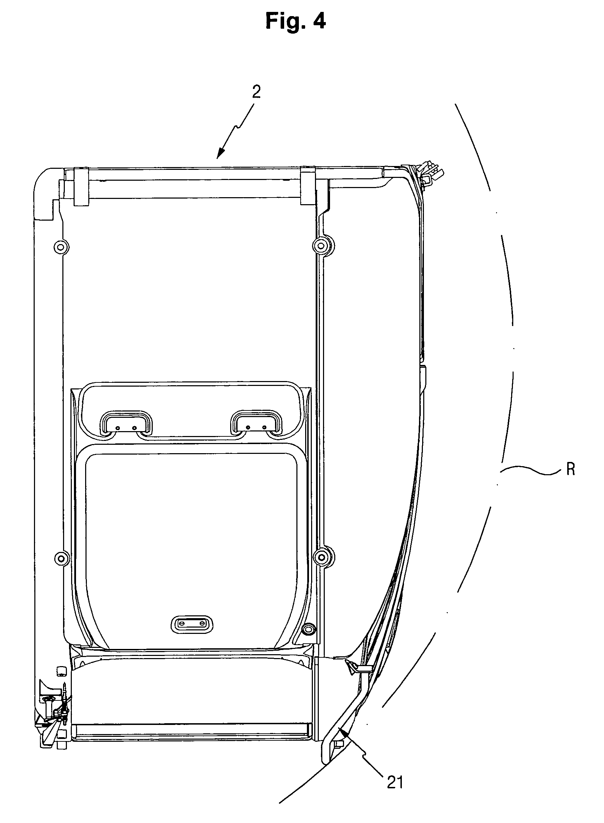

As shown in Figures 4 through 6, in a cab of a small swing radius excavator which is equipped with a door for opening and closing its entrance, and a handrail installed outside the cab, a cab of construction equipment comprises an improved handrail 21 which includes a lower handrail 21a fixed at a lower outer side of a front left side piller 20 of the cab 2 and positioned within a swing radius range of construction equipment and an upper handrail 21b asymmetrically extended on the lower handrail 21a for being positioned within a swing radius range of construction equipment and fixed at an outer upper side of a front piller 20.

One between the upper handrail 21b and the lower handrails 21a is equipped with a rod shaped straight section (for example, the upper handrail 21b has a straight section), and the other one is equipped with an arc shaped curved section (for example, the lower handrail 21a has a curved section).

Namely, the handrail 21 is positioned within a swing radius R of construction equipment and is formed of a lower handrail 21a having a curved part not to interfere with a driver's forward vision, and an upper handrail 21b having a straight section, with the lower and upper handrails 21a and 21b being integral with each other.

The upper handrail 21b is fixed closer to an entrance of the cab 2 so that a driver can easily hold the upper handrail 21b when the driver leaves the cab 2. The lower handrail 21a is fixed to be positioned in front of the front window 22 while escaping from the front left side piller 20 of the cab 2 not to interfere with a driver's forward vision.

The upper side of the front piller 20 is inclined toward a rear side of the construction equipment when viewing from the lower side of the front piller 20 so as to obtain a driver's wider upper forward vision.

The lower handrail 21a is fixed closer to an outer side surface of the front piller 20 within a range which does not escape from a swing radius R. The upper handrail 21b is positioned within a swing radius R so that a driver can easily hold the upper handrail 21b even when it is protruded from an outer side surface of the front piller 20 by a certain distance.

Here, the handrail 21 formed of the lower handrail 21a and the upper handrail 21b and engaged at the front piller of the cab 2 would be installed in a cab of a small swing radius excavator as well as a small non-swing radius(the cab shown in the accompanying drawings is provided for a better understanding of the present invention).

The construction except for the handrail 21 formed of the upper and lower handrails 21b and 21a, which is installed in an outer side surface of the front left side piller 20 of the cab 2 while not interfering with a driver's forward vision, is actually applied with the same construction as the construction of the cab 2 shown in Figure 1, so the detailed descriptions of the same will be omitted.

The operations of the handrail of a small swing radius excavator according to an embodiment of the present invention will be described with reference to the accompanying drawings.

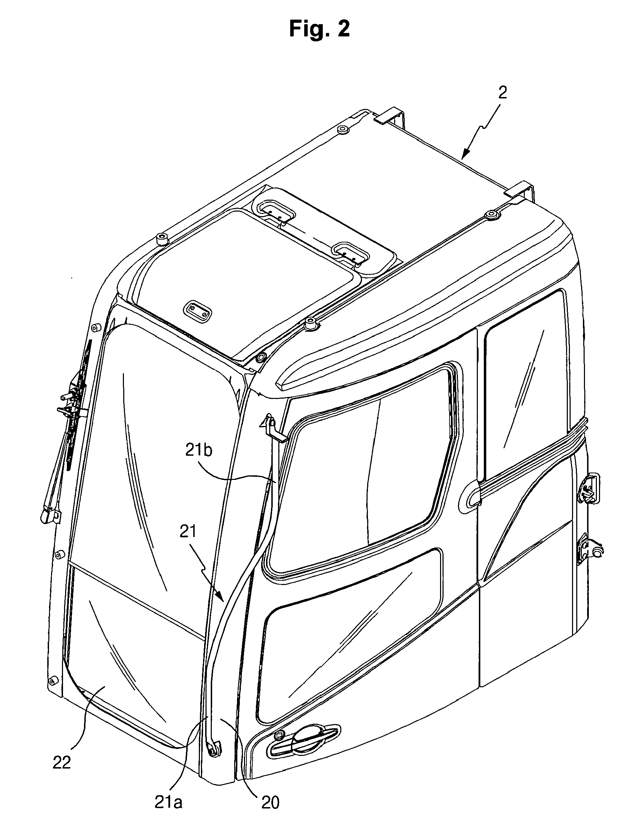

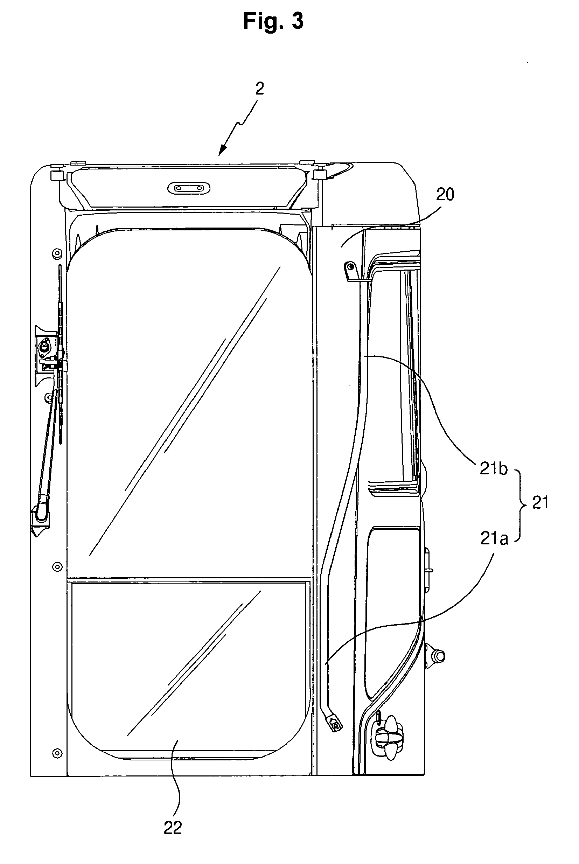

As shown in Figures 2 through 4, when a driver opens a door toward a rear side of the cab 2, the door moved to its open position is positioned within a swing radius of construction equipment. So, the construction equipment does not interfere with a neighboring building or tree in the course of swing work in a state that the door is open when work is performed in an alley of a city having a narrow work space.

Since the handrail 21 formed of the lower and upper handrails 21a and 21b is positioned within a swing radius R, it is possible to prevent the handrail 21 from being broken by means of a collision or contact with a neighboring object in the course of swing work.

When a driver wants to leave the cab 2, the driver can come down in safe while holding the handrail 21 after the door is open. Since the upper handrail 21b fixed in an upper outer side of the front piller 20 is arranged closer to the entrance 2b, the driver can come down from the cab 2 in safe while easily holding the handrail 21b.

Since the lower handrail 21a of the handrail 21 positioned within a swing radius R of construction equipment is fixed not to be positioned in front of the front window 22 while escaping from the position of the front piller 20, a driver's forward vision is not interfered.

With the above constructions, a driver can have a wider forward vision, which leads to enhancing an operation performance and workability of construction equipment.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. In a cab of a small swing radius excavator which is equipped with a door for opening and closing its entrance, and a handrail installed outside the cab, a cab of construction equipment, comprising:
an improved handrail 21 which includes a lower handrail 21a fixed at a lower outer side of a front left side piller 20 of the cab 2 and positioned within a swing radius range of construction equipment and an upper handrail 21b asymmetrically extended on the lower handrail 21a for being positioned within a swing radius range of construction equipment and fixed at an outer upper side of a front piller 20.

2. The cab of claim 1, wherein one between said upper handrail 21b and said lower handrails 21a is equipped with a rod shaped straight section, and the other one is equipped with an arc shaped curved section.

3. The cab of either claim 1 or claim 2, wherein said upper handrail 21b is fixed while being positioned closer to an entrance of the cab 2, and the lower handrail 21a is fixed while not being positioned in front of a front window 22, escaping from the front piller 20 of the cab 2.
